# EUROPEAN PATENT APPLICATION

(11) **EP 2 436 924 A1**
(43) Date of publication of application: **04.04.2012**
(21) Application number: 10290529.6
(22) Date of filing: 01.10.2010
(51) Int. Cl.: F03D 11/04, F03D 11/00

(54) **Wind turbine appartus**

(71) Applicant: Adrian, Thompson, Le Heron 76780 (FR)
(72) Inventor: Adrian, Thompson, Le Heron 76780 (FR)
(74) Representative: Cozens, Paul Dennis

(57) **Abstract**

The present invention relates to an apparatus for a horizontal axis wind turbine, comprising a rotatable fairing mountable on a tower of the wind turbine. The fairing may be adapted to rotate in dependence on the wind direction, and may comprise a plurality of sections, each section being independently rotatable on said tower. The invention also relates to a tower for a wind turbine, the tower comprising a rotatable fairing, and the tower may form part of a wind turbine including a nacelle, generator and rotor. Furthermore, the invention relates to a method of mounting a fairing apparatus to a tower of a horizontal axis wind turbine, the method comprising: attaching means for rotatably mounting said apparatus on said tower; and attaching the fairing to said mounting means.

## Description

The present invention relates to apparatus for wind turbines, and in particular to rotatable fairings mountable to existing wind turbine towers, and to methods of mounting the apparatus to wind turbines. The invention also extends to towers for wind turbines incorporating rotatable fairings. In addition, the invention relates to wind turbines, and wind farms, comprising rotatable fairings mounted on the tower of the wind turbine.

### Background

Global warming is finally recognized as a world issue requiring changes in political expedience and commitment. The increased demand and funding for renewable energy has accelerated the development of wind turbine generators. The most common type in service is the horizontal axis wind turbine, (HAWT) and although the overall concept and arrangement appears little changed in the last decade, there has been extensive development with regard to scaling, with improved efficiency and reduced environmental impact. However, there remain certain inefficiencies which the present invention may ameliorate.

### Statements of Invention

According to a first aspect of the present invention there is provided apparatus for a horizontal axis wind turbine, comprising a rotatable fairing mountable on a tower of the wind turbine. The tower being the support structure for the electricity generating apparatus, such as the nacelle, generator and rotor. By providing a rotatable fairing the efficiency of the wind turbine may be increased due to reduced interference between the rotor and the tower, the aerodynamic loading on the tower may be reduced both by reducing the downstream turbulence and reducing the effect of the rotor downwash, and the noise associated with the wind turbine may be reduced.

Preferably, the fairing is adapted to rotate in dependence on the wind direction, and thus may self-align to a substantially optimal orientation to minimise wind loads on the rotor and tower.

Alternatively, the fairing comprises a plurality of sections, each section being independently rotatable. By providing a fairing with a plurality of sections, the efficiency of the wind turbine may be yet further increased. Preferably, each said section of fairing is adapted to rotate in dependence on the wind direction at said section.

Preferably, the fairing is adapted to rotate such that the major axis (of the cross-section of the fairing) of said fairing is substantially parallel to the wind direction.

Preferably, the fairing is adapted to fully surround said tower, and thus aerodynamics of the fairing may be improved.

Alternatively, the fairing forms a trailing edge, and said tower forms a leading edge, and thus the weight and complexity of the fairing may be reduced. Preferably, the fairing comprises at least one seal between said trailing edge and said tower, adapted to substantially prevent airflow into said fairing, and thus may improve the reliability and may also further improve the aerodynamics of the fairing.

Preferably, the fairing has a substantially teardrop shape, and thus the aerodynamics of the fairing may be improved. More preferably, the teardrop has a ratio of length along its major axis to length along its minor axis between 1.5 and 4.5, preferably 1.75 and 3.0, more preferably between 1.9 and 2.1.

Preferably, the profile of the fairing varies along its length. By varying the profile of the fairing along its length the profile may be optimised for the expected air flow conditions at any point along the fairing, and thus the efficiency of the apparatus may be improved.

Preferably, the length of said fairing is between 0.75 and 1.25 times the radius of a rotor of the wind turbine, preferably between 0.9 and 1.1 times the radius of the rotor, more preferably substantially equal to the radius of the rotor, and thus the weight of the apparatus may be minimised.

Preferably, the fairing is adapted to be coupled to a nacelle of the wind turbine, such that the major axis of said fairing and the major axis of the nacelle are substantially parallel. By coupling the fairing to the nacelle the fairing may remain in a position that does not interfere with the rotation of the rotor.

Preferably, the apparatus further comprises means for controlling the rotation of said fairing. In addition, the control means may comprise means for determining the wind direction, a motor, a gearbox adapted to couple the motor and the fairing, and a motor controller adapted to rotate the fairing in dependence on the output of said determining means. More preferably, the motor is a stepper motor.

Preferably, the apparatus further comprises means for mounting said apparatus on said tower. More preferably, the mounting means comprises at least one bearing, each said bearing preferably comprising a first section and a second section, such that the bearing may be mounted on the tower in situ. Yet more preferably, the at least one bearing is a ball bearing.

According to a further aspect of the present invention, there is provided a tower for a wind turbine, the tower comprising a rotatable fairing. Preferably, the fairing is a fairing as aforementioned.

According to a yet further aspect of the present invention there is provided a wind turbine comprising the aforementioned tower, and a nacelle and rotor.

According to a yet further aspect of the present invention there is provided a wind farm comprising a plurality of wind turbines as aforementioned.

According to a still further aspect of the present invention, there is provided a wind turbine comprising a tower, a nacelle including a generator, a rotor and an apparatus as aforementioned.

Preferably, the rotor is adapted to be upwind from the tower. Alternatively, the rotor is downwind from said tower, and thus the fairing may be adapted to minimise the disruption to the airflow presented to the rotor.

According to a further aspect of the present invention, there is provided a method of mounting an apparatus as aforementioned to a tower of a horizontal axis wind turbine, comprising: attaching means for rotatably mounting said apparatus on said tower; and attaching the fairing to the mounting means.

Preferably, the means for rotatably mounting said apparatus comprises at least one bearing comprising at least a first section and a second section, the method further comprising using an adhesive to fix said first and second sections to the tower.

The invention extends to methods and/or apparatus substantially as herein described with reference to the accompanying drawings.

Apparatus and method features may be interchanged as appropriate, and may be provided independently one of another. Any feature in one aspect of the invention may be applied to other aspects of the invention, in any appropriate combination. In particular, method aspects may be applied to apparatus aspects, and vice versa.

Embodiments of this invention will now be described, by way of example only, with reference to the accompanying drawings, of which:
Figures 1 show the typical air flow characteristics around three differing body shapes;
Figure 2 shows a side elevation of a wind turbine incorporating a rotatable fairing;
Figure 3 shows a cross-section of the fairing enclosing the tower;
Figure 4 shows a cross-section of the trailing edge fairing;
Figure 5 shows the cross-section A-A in Figure 2, with each section of the fairing in different rotational positions;
Figures 6 show a cross-section of a means of mounting the fairing as shown in Figure 3 to the tower of the wind turbine;
Figure 7 shows a detail view of the interface between the fairing, the bearing and the wind turbine tower;
Figure 8 shows an isometric view of a fairing element on a wind turbine tower; and
Figure 9 shows a schematic diagram of a control system.

Throughout the description, the following terms are used for the main components of the wind turbine:
- Rotor: The blade set or propeller;
- Tower: The column or supporting structure - usually a cylinder;
- Nacelle: The pod housing the generator, gearbox and supporting boss for the rotor.

Scaling exercises are being implemented to improve efficiency, as the larger the rotor diameter, the greater the power potential per unit of installed cost. Increased size has attracted structural issues regarding stiffness of blades and towers and unwanted vibrations leading to increased fatigue and noise generation.

Just about all HAWT have their rotor mounted up-wind of the tower to promote a clean undisturbed flow of air to the rotor. Mounting the rotor downstream of the tower would result in reduced efficiency as the blades would be operating in the turbulent wake of the tower structure.

In 1919 the physicist Albert Betz showed that for a hypothetical ideal wind-energy extraction machine, the fundamental laws of conservation of mass and energy allowed no more than 16/27 (59.3%) of the kinetic energy of the wind to be captured. Although Betz' law limit can be approached by modern turbine designs which may reach 70 to 80% of this theoretical limit, manufacturers continue to develop their products to optimise outputs. Wind turbines are typically designed to have a minimum life span of 25 years, and so modest increases in efficiency have the potential to show a good return on investment.

### Basic aerodynamic principals

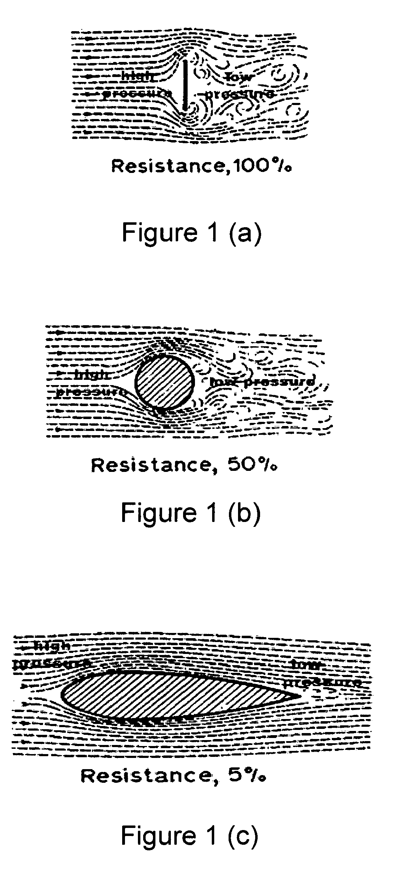

A flat plate attracts just about the highest drag of a simple form. High pressure can be found upstream of the plate and turbulent low pressure in the downstream; an example of such an airflow over a flat plate can be seen in Figure 1(a). A cylinder cuts drag by around 50%, but still displays considerable turbulence in the downstream eddies; an example of such an airflow over a cylinder can be seen in Figure 1(b). An aerofoil section attracts 1/10^{th} of the drag of a cylindrical form, and has modest pressure changes and negligible turbulence downstream; an example of such an airflow over an aerofoil (teardrop) form can be seen in Figure 1 (c).

It is presented that turbulent flow downwind from the supporting tower adversely influences the efficiency of the upwind rotor. A cylindrical form is a high drag form, with shedding vortexes and turbulent downstream eddies. Figures 1 indicate the relative aerodynamic drag of three forms representing the maximum drag of a flat plate, to the minimum drag form of an aerofoil.

### Aerodynamic fairing

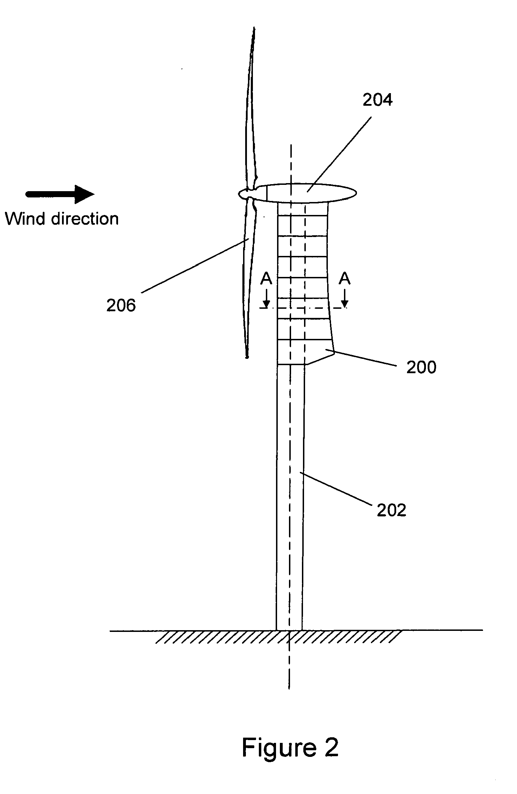

As can be seen in Figure 2, an aerodynamic fairing 200 is provided that shrouds the wind turbine tower 202. The fairing may or may not be coupled to the nacelle 204 that houses the generator, gearbox and supporting boss for the rotor 206.

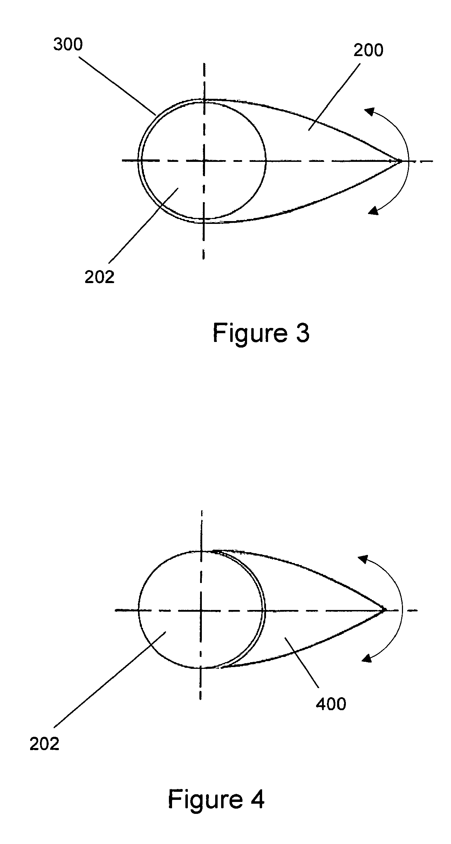

The aerodynamic fairing 200 is adapted to rotate about the tower on bearing rings or similar annular arrangements mounted on the tower structure. In one example, as shown in Figure 3, the fairing completely envelopes the tower. By completely enveloping the tower the fairing reduces the requirement for maintenance of the mountings and bearings that attach the fairing to the tower since the environmental weather (such as rain, snow, sleet etc) is somewhat prevented from entering the mechanism. Alternatively, as shown in Figure 4, the fairing is comprised of a trailing edge only; in this example, the tower itself comprises the leading edge of the fairing. As can be seen in Figure 2, the fairing 200 may only be required on the upper sections of the tower in the wind shadow of the rotors' swept diameter. This may both reduce costs and save weight as compared to a fairing the envelopes the entire tower.

The velocity of the air downwind of the rotor, especially downwind of the tips of the blades, will exceed the true wind speed, and so the fairing is designed such that the influence on the tower of the relatively high speed air flow is reduced. In addition, the pressure changes and the turbulence occurring between the rotor and the tower are also reduced; this has the effect of reducing the noise generated by the wind turbine, and also the drag associated with the air flow over the tower.

The aerofoil fairing could comprise of a number of elements within in its length to assist manufacture and installation. It may be desirable to vary the angle of the aerofoil faring along its length to match the changing downwash angle of the wind from the rotor.

(This is due to the speed (m/sec) of the blade tip being many times greater than close the hub. The downwash angle of the wind generated by the blade rotation will therefore *vary along its length.)* However, it is preferred to use identical fairing sections in order to reduce manufacturing costs.

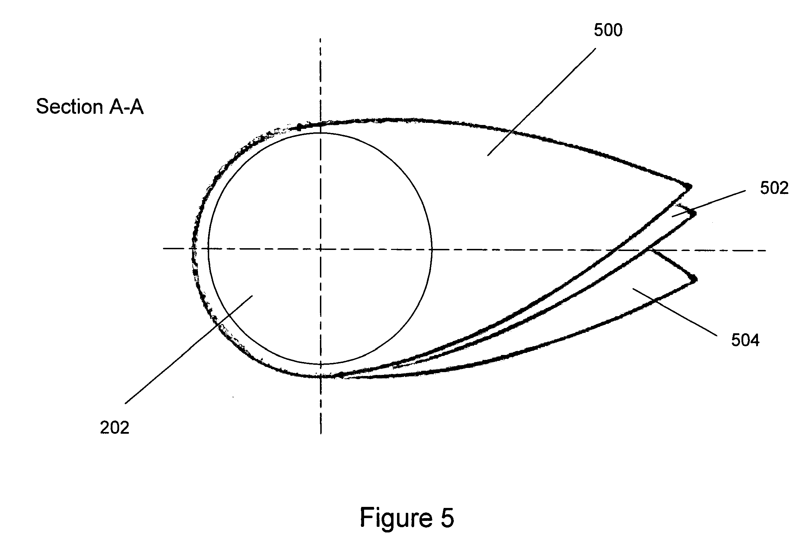

As can be seen in Figure 5, when the fairing comprises a number of different elements 500, 502 and 504 each element may be enabled to rotate independently from each other element. This allows each element to rotate to the position that is most suitable at that location along the tower. For example, as described above, the downwash from the rotor may vary along its length, and thus providing a plurality of independent elements allows for a more optimised fairing orientation.

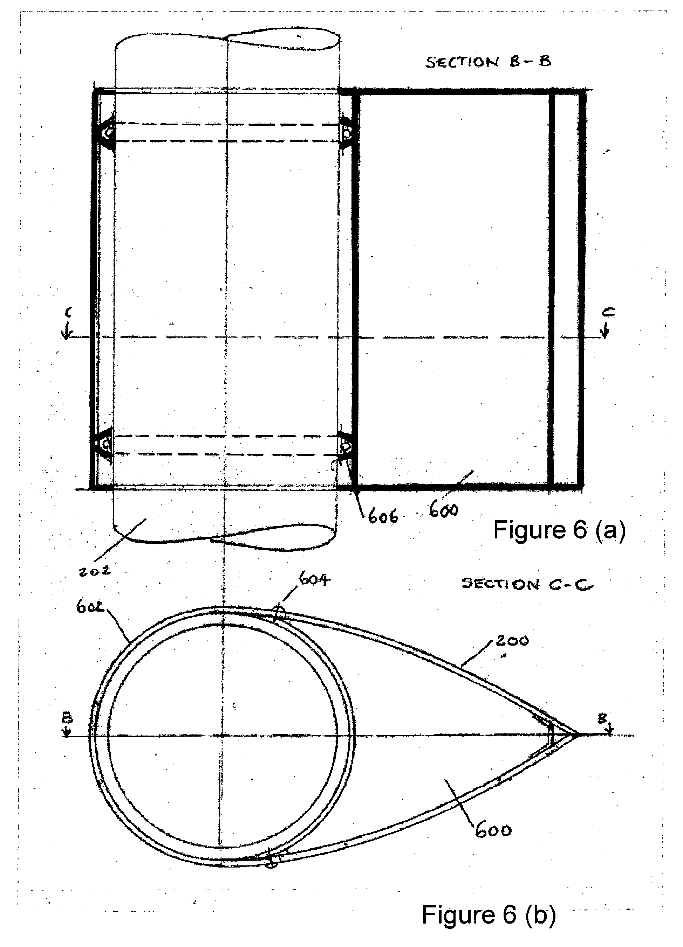

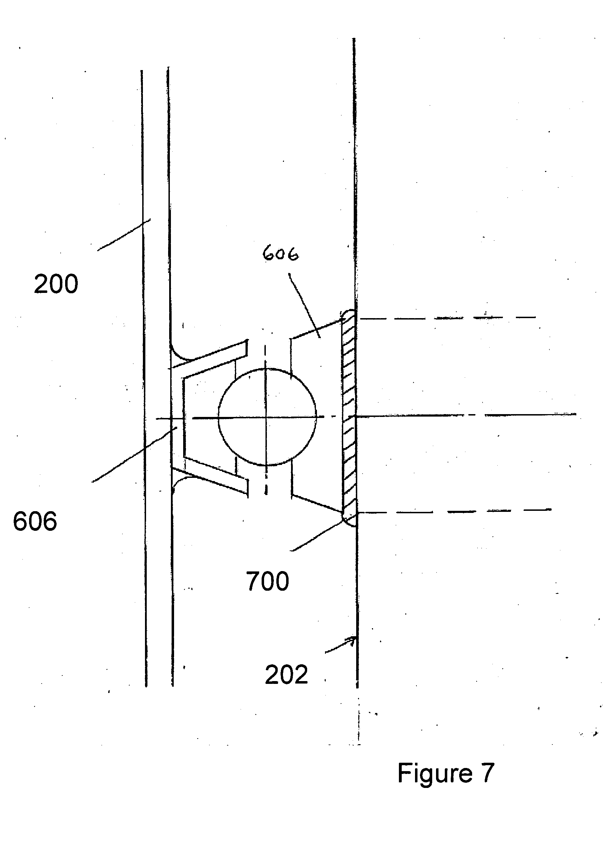

Figures 6 show a cross-section of a wind turbine tower 202 with a fairing 200 as shown in Figure 3. (The components shown in Figure 6 are not to scale and are shown enlarged in some cases to aid clarity.) In this example, the fairing may comprise multiple elements in which case the arrangement as shown in Figure 6 is repeated along the tower the required number of times, or the fairing may comprise a single element as shown. In order to enable construction the fairing 200 may comprise two parts, a trailing edge 600 and a leading edge 602. The two-parts of the fairing are clamped together around the tower 202 using the fixings 604 (e.g. bolts). Ball bearing clusters 606 are utilised at the top and bottom of each fairing element in order to support the weight of the fairing and to support the aerodynamic loads while allowing the fairing to rotate freely. The holes for the fixings 604 may be filled after the fairing is in place to further improve the aerodynamics of the fairing. The ball bearings 606 are attached to the tower using a putty/mastic interface (further details of the attachment of the bearings to the tower are shown in Figure7). The ball bearings may be a Conrad type, or a slot fill type, to enable ease of assembly and maintenance of the fairing system without the requirement to remove the bearings from the tower. A similar arrangement may be used when a trailing edge fairing as shown in Figure 4 is utilised.

Figure 7 shows a detail view of the interface between the fairing 200, the bearing 606 and the tower 202. As can be seen the bearing comprises an inner and outer race, the inner race being attached to the tower using putty/mastic 700; using this type of interface enables the fairing system to be retro-fitted to existing wind turbine installations. In addition, the inner and outer races of the bearing may comprise two parts which enable to the bearing to be mounted around the tower without the need to remove the nacelle. The two parts of the bearing may be interlocked to prevent relative movement between the two parts during operation. The ball bearings may be of a composite construction with, for example, PTFE balls as the fairing is light weight.

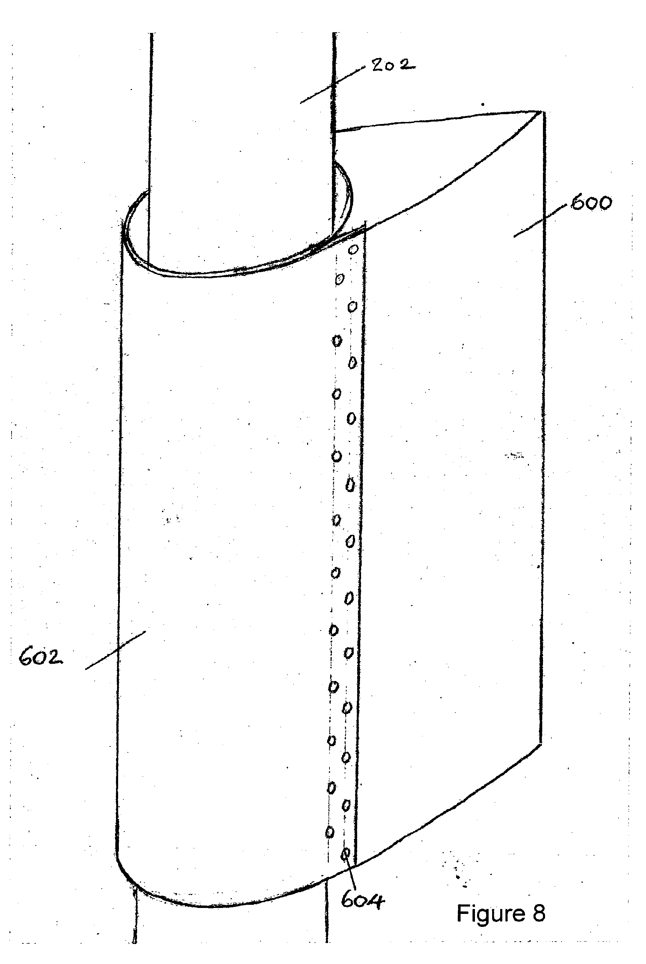

Figure 8 shows an isometric view of a fairing element on a wind turbine tower, and as can be seen the leading edge 602 and the trailing edge 600 of the fairing are connected together using fixings 604. The fixings 604 are staggered along the length of the fairing element to provide a secure connection between each component.

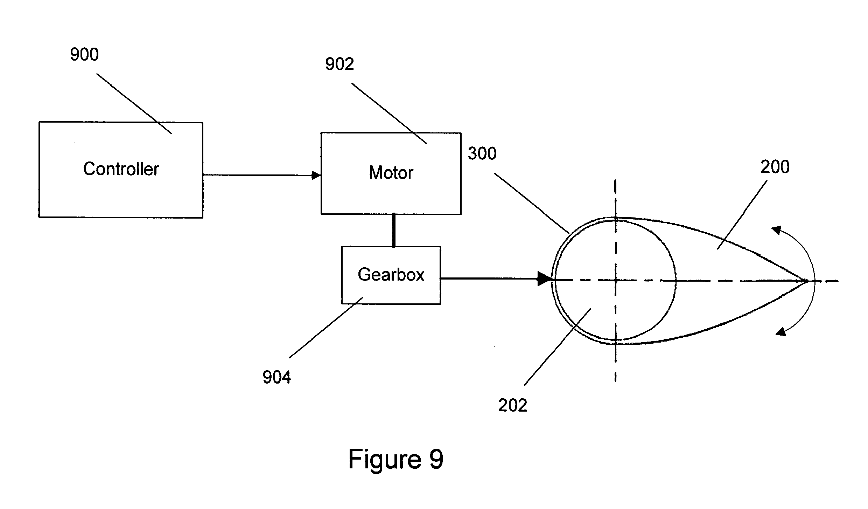

A HAWT is required to present its axis directly into the wind at all times during operation, and the aerofoil element of the tower will have to maintain orientation with the rotor and nacelle - i.e. lie down wind of the rotor. This is preferably accomplished by coupling the fairing to the nacelle chassis, so that the whole ensemble moves as one. In addition, each fairing element may be tethered to its neighbouring fairing element allowing restricted relative movement between each element and the nacelle. The tether may comprise a peg locating in a slot in the neighbouring elements, or a flexible strop or the like. Alternatively, it could be allowed to self orientate as it will naturally lie downstream of the airflow, indeed this arrangement may offer the better aerodynamic efficiencies as each segment would self align to the wind direction at that point on the tower; again, this arrangement may make use of the tethering system as described above. However, additional clearance between the tower and blade may be required for this arrangement, as in wind speeds above operational limits, the nacelle may be locked in a position that is not into the wind, whilst the fairings would be free to rotate. A yet further example, as shown in Figure 9, provides a controller 900 so that the fairing 200 may be oriented using a motor 902 (such as stepper motor) and gearbox 904 arrangement that is controlled using the controller which is adapted to detect the direction of the wind and orient the fairing using the motor in dependence on the wind direction.

The fairing may be made from a composite construction using a resin/fibre matrix commonly used for the rotors.

It is of course to be understood that the invention is not intended to be restricted to the details of the above embodiments which are described by way of example only, and modifications of detail can be made within the scope of the invention.

Each feature disclosed in the description, and (where appropriate) the claims and drawings may be provided independently or in any appropriate combination.

## Claims

1. Apparatus for a horizontal axis wind turbine, comprising a rotatable fairing mountable on a tower of the wind turbine.

2. Apparatus according to Claim 1, wherein said fairing is adapted to rotate in dependence on the wind direction.

3. Apparatus according to Claim 1 or 2, said fairing comprising a plurality of sections, each section being independently rotatable on said tower.

4. Apparatus according to Claim 3, wherein each said section of fairing is adapted to rotate in dependence on the wind direction at said section.

5. Apparatus according to any of Claims 2, 3 or 4, wherein said fairing is adapted to rotate such that the major axis of said fairing is substantially parallel to the wind direction.

6. Apparatus according to any of the preceding claims, wherein said fairing is adapted to fully surround said tower.

7. Apparatus according to any of Claims 1 to 5, wherein said fairing forms a trailing edge, and said tower forms a leading edge.

8. Apparatus according to Claim 7, said fairing including at least one seal between said trailing edge and said tower, adapted to substantially prevent airflow into said fairing.

9. Apparatus according to any of the preceding claims, said fairing having a substantially teardrop shape.

10. Apparatus according to Claim 6, said teardrop having a ratio of length along its major axis to length along its minor axis between 1.5 and 4.5, preferably 1.75 and 3.0, more preferably between 1.9 and 2.1.

11. Apparatus according to any of the preceding claims wherein the profile of said fairing varies along the axis of said tower.

12. Apparatus according to any of the preceding claims, the length of said fairing being between 0.75 and 1.25 times the radius of a rotor of the wind turbine, preferably between 0.9 and 1.1 times the radius of the rotor, more preferably substantially equal to the radius of the rotor.

13. Apparatus according to any of the preceding claims, said fairing being adapted to be coupled to a nacelle of the wind turbine, such that the major axis of said fairing and the major axis of the nacelle are substantially parallel.

14. Apparatus according to any of the preceding claims further comprising means for controlling the rotation of said fairing.

15. Apparatus according to Claim 14, wherein said control means comprises means for determining the wind direction, a motor, a gearbox adapted to couple the motor and the fairing, and a motor controller adapted to rotate the fairing in dependence on the output of said determining means.

16. Apparatus according to Claim 15, wherein said motor is a stepper motor.

17. Apparatus according to any of the preceding claims, further comprising means for mounting said apparatus on said tower.

18. Apparatus according to Claim 17, wherein said mounting means comprises at least one bearing, each said bearing comprising a first section and a second section.

19. Apparatus according to Claim 18, said at least one bearing being a ball bearing.

20. A tower for a wind turbine, the tower comprising a rotatable fairing.

21. A wind turbine comprising the tower according to Claim 20, and a nacelle and rotor.

22. A wind farm comprising a plurality of wind turbines according to Claim 21.

23. A wind turbine comprising a tower, a nacelle, a rotor and an apparatus according to any of Claims 1 to 19.

24. A wind turbine according to Claim 23, wherein said rotor is adapted to be upwind from said tower.

25. A wind turbine according to Claim 23, wherein said rotor is adapted to be downwind from said tower.

26. A method of mounting an apparatus according to any of Claims 1 to 19 to a tower of a horizontal axis wind turbine, comprising:
attaching means for rotatably mounting said apparatus on said tower; and
attaching the fairing to said mounting means.

27. A method according to Claim 26, wherein said means for rotatably mounting said apparatus comprises at least one bearing comprising at least a first section and a second section, the method further comprising using an adhesive to fix said first and second sections to the tower.

28. Apparatus for a horizontal axis wind turbine substantially as described herein with reference to any of Figures 2 to 8.

29. A method of mounting a rotatable fairing to a horizontal axis wind turbine substantially as herein described with reference to any of Figures 2 to 8.
